# EUROPEAN PATENT SPECIFICATION

(11) **EP 0 399 442 B1**
(45) Date of publication and mention of the grant of the patent: **17.08.1994**
(21) Application number: 90109635.4
(22) Date of filing: 21.05.1990
(51) Int. Cl.: C09D 5/02, C09D 7/12

(54) **Rheology control additive for waterborne paint compositions**
Rheologie kontrollierendes Zusatzmittel für wässerige Anstrichmassen
Additif de contrôle de la rhéologie pour compositions de peinture aqueuse

(30) Priority: 23.05.1989 US 355958
(43) Date of publication of application: 28.11.1990
(73) Proprietor: BASF Corporation, Clifton, New Jersey 07015-6001 (US)
(72) Inventor: McClanahan, Craig, Bowling Green, Ohio 43402 (US); Anderson, Jr. James L., Grand Rapids, Ohio 43522 (US)
(74) Representative: Münch, Volker, Dr.

(56) References cited:
- US-A- 4 416 941
- US-A- 4 429 066

## Description

### BACKGROUND OF THE INVENTION

This invention relates to the use of a rheology control additive composition in waterborne coatings. The application properties and final appearance of a coating are critical characteristics particulary in coatings intended for used on transportation vehicles.

The rheology of the coating composition greatly influences these critical characteristics. For a composition intended for spray application,the general rheological requirements for solvent and waterborne coatings are similar but the specific needs may vary markedly. These differences mainly result form the fact that water is a very slowly evaporating solvent. Also, because of the great chemical differences between water and the solvents typically used in solvent borne coating compositions many of the rheology control additives used in the latter compositions are not suitable for use in waterborne coating compositions.

The general rheological requirements are that the coating have a high viscosity at low shear rates and a low viscosity at high shear rates. The former is necessary to promote antisettling character, sag resistance and good metal control. In addition the composition should have little elasticity at high shear rates.

Additives are commonly used to design the proper rheolgy in the coating composition. There are few additives suitable for use in waterborne coatings intended for use on transportation vehicles. U.S. Patent Nos. 4,416,941 and 4,429,066 teach that colloidal silica with a bridging agent works well as a rheology control additive for solvent borne systems. The product bulletin, "Cab-O-Sil Properties and Functions", by Cabot Corp., describes the use of additives to enhance the viscosity of aqueous dispersions of fumed silica. Surprisingly, the bridging agents described below greatly improve the action of the colloidal silica in waterborne coating thereby improving the coatings application properties and appearance.

### SUMMARY OF THE INVENTION

The invention refers to the use of a rheology control additive composition in waterborne coating compositions wherein the additive composition is comprised of
(a) a hydrophilic colloidal silica and
(b) a water soluble or water dispersible fluorcarbon polymer containing 2 - 25 % by weight, based on the weight of the fluorocarbon polymer, of fluorine.
The additive improves the application properties and apperance of waterborne coatings. It may be used in coating compositions designed for coating automobiles, trucks and buses. The additives could be used in various classes of water borne coating compositions including the following: undercoats; primers; sealers; color coats; basecoats; clear coats.

### DESCRIPTION OF THE INVENTION

The additive of this invention promotes pseudoplastic rheology in waterborne coating compositions thereby improving application properties and the final appearance. The additive composition is uses at a level of about 0.1.-30 % by weight per weight of the coating composition. The rheology that the additive imparts to the paint permits the application of attractive, defect free films using conventional equipment particularly spray application. In metallic or glamour coating compositions the additives promotes good metal control. Good metal control means that the iridescent pigments, typically aluminum flake, are uniformly distributed parallel to the substrate. Such an alignment makes the coating bright and mottle free and produces a good flop. Additionally, the additive retards pigment settling thereby improving the stability and performance of the paint.

The silica (silica dioxide) used in this additive has a primary particle size of about 0.001-100 microns and a surface area of about 50-500 square meters per gram. An example of such a colloidal silica is fumed or pyrogenic silica. It is prepared by the hydrolysis of silicon tetrachloride vapor in a flame of hydrogen and oxygen. It typically has a SiO₂ content of greater than 98 % by weight and preferably greater than 99.6 % by weight.

The additive also contains a bridging agent that interacts with the fumed silica to greatly increase the low shear rate viscosity of the coating composition. This surfactant component of the additive is a water soluble or water dispersible fluorocarbon polymer containing 2 to 25 % by weight, based on the weight of the fluorocarbon polymer, of fluorine. Preferably, the component (b) is a nonionic fluorocarbon polymer having ethylene oxide linkages and a weight average molecular weight of 5,000 to 50,000. The additive composition comprises about 50 to 99 % by weight of the silica component (a) and about 0,1 to 50 % by weight ot the surfactant component (b).

The additive ist intended for use primarily in waterborne coatings. Such compositions may use either latexes or water soluble or dispersible resins or a combination thereof as the binder. The latex or water soluble resin based coating compositions may be thermoplastic or thermosetting. They may or may not be baked.

Commonly used coating compositions would be based on acrylic resins. Suitable properties of an acrylid latex binder as supplied for use are as follows: solids content, 20-60 %; pH of 7 to 10; weight per gallon of 8.0 to 9.0 lbs; minimum film forming temperature of 0 to 70 °C; Sward hardness of 25 to 110; glass transition temperature of 10 to 50 °C; molecular weight of 15,000 to 3000,000, number average molecular weight of 30,000 to 60,000; acid number on solids; 5 to 35; 0 to 20 % volatile organic solvents; particle size of 50 to 150 nm. Specially preferred acrylic latexes are Neocryl A-622, Neocryl A-640, Neocryl A-6037 sold by ICI resins, Joncryl J-537, Joncryl J-538 sold by Johnson Wax, Arolon 860-w-45 sold by NL Industries.

The resin used in the pigment grinding process may also be an acrylic latex. Suitable properties of this latex as supplied for use are the same as for the acrylic latex binder described above.

The additive may be used in any of a variety of coating compositions. It may be suitable for use in undercoats, meaning primers, fillers and sealers. It is also effective in topcoat formulations including color coats, basecoats and clear coats.

The additive is particularly useful in waterborne basecoats. In such systems, the color is contained in the basecoat which is topcoated with a clear coat. The clear coat helps protect the underlying basecoat and produces a high gloss finish.

### EXAMPLE 1

An 8 percent by weight dispersion of a fumed silica in water was prepared on an Eiger model VSE mini motor mill. The fumed silica had an average primary partilce size of 12nm and a surface area of 200 m²/g. The silica was ground to below 20 microns in size. A portion of this grind base was diluted with deionized water to a silica concentration of 2 percent by weight. The viscosity profile of this dispersion was measured before and after the addition of a fluorine containing surfactant (Figure 1). The measurements were made on a Bohlin VOR rheometer at 25°C using a 30 mm parallel plate geometry.

A fluorine containing surfactant was added to the dispersion to a level of 0.2% active by weight. Note the tremendous increase in low shear rate viscosity produced by the interaction of the surfactant and the colloidal silica. The following is a description of the surfactant: It is nonionic with about 50% by weight of ethylene oxide linkage and containing about 10-20% by weight fluorine and having a molecular weight of about 20,000.

Examples 2 through 4 are included to demonstrate the use of this rheology control additive in actual coating compositions.

### Example 2: Base Coat Preparation

### Preparation of an Acrylic Polymer modified with A Glycidyl Ester of Tertary C10 Fatty Acid.

A five liter three neck round bottomed flask was fitted with an agitator, thermometer, condenser, nitrogen inlet and monomer inlet and charged with 680 g of methoxypropanol, 20 g of methyl ethyl ketone. The mixture was brought to reflux and the temperature adjusted to 140-141 C by adding 5.0 g of methyl ethyl ketone. A monomer solution was prepared containing 333 g of propenoic acid, 847 g of methyl-2-methyl-2-propionate, 450 g of 2-ethylhexyl-2-methylpropionate, 180 g of isobornyl-2-methyl-2-propionate and 27 g of Surfynol 440. An initiator solution was also prepared containing 36 g of t-butyl peroxybenzoate and 76 g of methoxypropanol. The above monomer solution and initiator solutions were added to the reaction flask at a uniform rate over two hours. After completion of the additions, the monomer line was flushed with 35.0 g of methoxypropanol and a solution containing 15 g of t-butylperoxybenzoate and 40 g of methoxypropanol was then added over 10 minutes. The reaction was then refluxed for an additional 135 minutes. After refluxing, 475 g of a glycidyl ester of a tertiary C10 fatty acid was added to the flask, heated to reflux and reacted to constant acid value. The reaction was allowed to cool, then 43 g of methoxypropanol and 588 g of ethanol were added to the resin to reduce the viscosity. The properties of the resin are: viscosity Z5-Z6, solids 60-61%, and acid number of 53 to 56 based on solids.

### Preparation of Component A - Aluminum Base

The acrylic resin described above, 44.0 g, was added to 19.0 g of butoxyethanol. This mixture was stirred until a homogeneous solution was produced. A commercial solvent borne aluminum paste, 38.0 g was added to the resin solution. The resulting slurry was then stirred until a smooth, uniform slurry was produced. This aluminum base contains 49.8 % by weight of volatile organic solvents, 38.4 % by weight of solids, and 24.3 % by weight of aluminum flake.

### Preparation of Component B - Neutralization Base

To 300 g of deionized water, 8.0 g of 30 % aqueous ammonia was added. The solution was stirred well before adding 100.0 g of the acrylic resin described above. The resulting mixture was stirred until the solution was clear to slightly turbid. The nonvolatile level of this base was 14.8 % by weight, water level 74.9 % by weight, volatile organic solvent 9.8 % by weight. The final pH of this dispersion was 9.2.

### Preparation of Component C - Clear Resin Latex

Premixed were 48.0 g of hydrophilic colloidal silica, 10.0 g of a defoamer and 1865 g of acrylic latex, Neocryl A-622. This mixture was then ground on a horizontal mill until a particle size of less than 8 microns was achieved. Deionized water, 260 g, was then added to the above slurry under agitation to yield an uniform latex solution. The level of silica was 2.2 % by weight. Volatile organic level was 8.9 % by weight, and solids level was 28.3 % by weight.

### Preparation of Component D - Pigmented Bases

The following pigment slurry was prepared, 80 g of Neocryl A-6037, 2.1 g of 30% aqueous ammonia, 23.9 g of transparent red oxide, and 0.2 g of adefoamer. The above components were mixed together and predispersed using a Cowles blade. The mixture was then ground on a horizonal mill until the desired particle size was achieved. A let down solution containing 70.0 g of the grind resin and 2.0 g of aqueous ammonia was added to the grind portion. The resulting pigment paste was reduced under agitation with a solution containing 5.75g of deionized water, 19.2 g of butoxyethanol. The resulting pigmented base had a pH of 9.2, a solids level of 48 % by weight, a volatile organic level of 9.4 % by weight, a binder level of 36.2 % by weight, a pigment level of 11.8 % by weight and a water level of 42.0 % by weight.

### Preparation of Component E - Surfactant Base

To 48 g of deionized water, 2.0 g of a ploymeric nonionic fluorocarbon surfactant was added. The mixture was stirred to give a slightly turbid solution.

### EXAMPLE 3 - PREPARATION OF A WATER BORNE RED METALLIC BASE COAT

| Component | Parts by Weight |
|---|---|
| Component B Neutralization Base | 4.0 |
| Component A Aluminum Base | 2.0 |
| Component C Clear Resin Base | 72.0 |
| Component D Pigmented Base | 13.0 |
| Component E Surfactant Base | 9.0 |

The above formula was used to prepare a red metallic base coat. The order of addition is that listed. After each introduction of a component, the entire solution was stirred. The base coat was sprayed on panels primed with an epoxy primer. The base coat was sprayed on the substrate using conventual spray equipment until hiding was achieved. The basecoat was allowed to flash for 30 minutes and then clear coated with a transparent coating based on isocyanate technology. The final properties of the base coat after coating with a convential polyurethane clear coat are listed below, including appearance ratings.

| Properties of the Red Metallic Base Coat and Base Coat/Clear Coat System | |
|---|---|
| Property | Value |
| Water | 68.9 % |
| Volatile Organic | 9.1 % |
| Pigment | 2.1 % |
| Nonvolatile | 28.1 % |
| Binder | 24.0 % |
| Weight per Gallon (lbs/gal) | 8.3 |
| VOC (lbs/gal) | 2.2 |
| Gloss,20 | 82 |
| DOI | 85 |
| Adhesion | good |
| Film Thickness(mil) | 1.0 |
| Humidity | good |
| Water Spray | excell. |
| Metal Control | excell. |

### EXAMPLE 4 - Preparation of a Water Borne Silver Metallic

| | |
|---|---|
| Component B Neutralization Base | 18.0 |
| Component A Aluminum Base | 9.1 |
| Component C Clear Base | 63.6 |
| Component D Surfactant Base | 9.1 |

The above formula was used to prepare a silver metallic base coat. The order of addition is that listed. After each introduction of a component, the entire solution was stirred. The base coat was sprayed on panels primed with an epoxy primer. The base coat was sprayed on the substrate using conventual spray equipment until hiding was achieved. The base coat was allowed to flash for 30 minutes and then clear coated with a transparent coating based on isocyanate technology. The final properties of the base coat after coating with a convential polyurethane clear coat are listed below, including appearance ratings.

| Properties of the Silver Metallic Base Coat and Base Coat/Clear Coat system | |
|---|---|
| Property | Value |
| Water | 67.9 % |
| Volatile Organic | 12.2 % |
| Pigment | 2.5 % |
| Nonvolatile | 24.4 % |
| Binder | 22.8 % |
| Weight/Gallon (lbs/gal) | 8.3 |
| VOC (lbs/gal) | 3.0 |
| Gloss, 20 | 83 |
| DOI | 82 |
| Adhesion | good |
| Film Thickness(mil) | 0.8 |
| Humidity | good |
| Water Spray | excell. |
| Metal Control | excell. |

## Claims

1. Use of a rheology control additive composition in waterborne coatings wherein the additive composition is comprised of
(a) a hydrophilic colloidal silica and
(b) a water soluble or water dispersible fluorocarbon polymer containing 2 to 25 % by weight, based on the weight of the fluorocarbon polymer, of fluorine.

2. Use according to claim 1 wherein the surfactant (b) being a nonionic fluorocarbon polymer having ethylene oxide linkages and having a weight average molecular weight of 5,000 to 50,000.

3. Use according to claim 1 and 2 wherein the additive composition comprises 50 to 99 % by weight of (a) and 0.1 to 50 % by weight of (b).

4. Use according to claims 1 to 3 wherein the additive composition is used at a level of 0,1 to 30 % by weight per weight of the coating composition.

## Patentansprüche

1. Verwendung eines rheologiesteuernden Zusatzmittels in wäßrigen Beschichtungsmitteln, wobei das Zusatzmittel aus
(a) einer hydrophilen kolloidalen Kieselsäure und
(b) einem wasserlöslichen oder wasserdispergierbaren Fluorkohlenwasserstoffpolymer mit 2 bis 25 Gew.-% Fluor, bezogen auf das Gewicht des Fluorkohlenwasserstoffpolymers, besteht.

2. Verwendung nach Anspruch 1, wofür das Tensid (b) ein nichtionisches Fluorkohlenwasserstoffpolymer mit Ethylenoxidverknüpfungen und einem gewichtsmittleren Molekulargewicht von 5000 bis 50.000 ist.

3. Verwendung nach Ansprüchen 1 und 2, wofür das Zusatzmittel zu 50 bis 99 Gew.-% aus (a) und zu 0,1 bis 50 Gew.-% aus (b) besteht.

4. Verwendung nach Ansprüchen 1 bis 3, wofür das Zusatzmittel in einer Konzentration von 0,1 bis 30 Gew.-%, bezogen auf das Gewicht der Beschichtungszusammensetzung, eingesetzt wird.

## Revendications

1. Utilisation d'une composition d'additif de contrôle de la rhéologie dans des enduits en suspension dans l'eau, caractérisée en ce que la composition d'additif est constituée
(a) d'une silice colloïdale hydrophile et
(b) d'un polymère fluorocarboné soluble dans l'eau ou dispersible dans l'eau, contenant de 2 à 25 % en poids, sur la base du poids du polymère fluorocarboné, de fluor.

2. Utilisation selon la revendication 1, caractérisée en ce que l'agent tensioactif (b) est un polymère fluorocarboné non ionique ayant des liens d'oxyde d'éthylène et ayant un poids moléculaire moyen au poids de 5 000 à 50 000.

3. Utilisation selon la revendication 1 et 2, caractérisée en ce que la composition d'additif comprend de 50 à 99 % en poids de (a) et de 0,1 à 50 % en poids de (b).

4. Utilisation selon les revendications 1 à 3, caractérisée en ce que la composition d'additif est utilisée à un niveau de 0,1 à 30 % en poids par poids de la composition d'enduit.
